# EUROPÄISCHE PATENTSCHRIFT

(11) **EP 1 003 243 B1**
(45) Veröffentlichungstag und Bekanntmachung des Hinweises auf die Patenterteilung: **01.03.2006**
(21) Anmeldenummer: 99119808.6
(22) Anmeldetag: 06.10.1999
(51) Int. Cl.: H01R 4/64

(54) **Verfahren zur Herstellung einer elektrischen Verbindung zu einem Blechteil und Zusammenbauteil**
Process for manufacturing an electrical connection to a metal sheet and mounting assembly
Procédé de fabrication d'une connexion électrique à une partie en tôle et ensemble de montage

(30) Priorität: 21.10.1998 DE 19848617
(43) Veröffentlichungstag der Anmeldung: 24.05.2000
(73) Patentinhaber: Profil Verbindungstechnik GmbH & Co. KG, 61381 Friedrichsdorf (DE)
(72) Erfinder: Müller, Rudolf, 60437 Frankfurt/Main (DE)
(74) Vertreter: Manitz, Finsterwald & Partner GbR

(56) Entgegenhaltungen:
- EP-A- 0 262 499
- EP-A- 0 540 030
- EP-A- 0 759 510
- DE-A- 2 844 384
- GB-A- 690 252
- GB-A- 2 064 046
- US-A- 3 829 957

## Beschreibung

Die vorliegende Erfindung betrifft ein Verfahren zur Herstellung einer elektrischen Verbindung zu einem eine nicht oder nur schlecht leitende Schutzschicht aufweisenden Blechteil, unter Anwendung eines hohlen Befestigungselementes, das mittels eines Nietverfahrens oder Stanz- und Nietverfahrens an das Blechteil angebracht wird, wobei ein Kabelschuh bzw. eine Anschlußklemme mittels einer Schraube an das hohle Befestigungselement bzw. an das Blechteil angebracht wird. Die Erfindung betrifft weiterhin ein Zusammenbauteil bestehend aus einem Blechteil, insbesondere einem Blechteil mit einer nicht oder nur schlecht leitenden Schutzschicht, und einem mit dem Blechteil vernieteten, hohlen Befestigungselement, das zur Aufnahme einer einen Kabelschuh bzw. eine Anschlußklemme befestigenden Schraube ausgelegt ist.

Die Forderungen an elektrische Verbindungen zu Blechteilen, insbesondere, jedoch nicht ausschließlich, im Sinne von Masseverbindungen an Kfz-Karosserieteile, gestalten sich zunehmend schwieriger.

Einerseits sind hochwertige elektrische Verbindungen erforderlich, damit die immer aufwendiger werdenden elektronischen Einrichtungen von Kraftfahrzeugen richtig funktionieren, insbesondere sicherheitskritische Einrichtungen wie beispielsweise Airbag-Auslösesysteme, andererseits geht man zunehmend dazu über, Blechteile zu verarbeiten, die mit einer Schutzschicht versehen sind, die eine schlechte oder gar keine elektrische Leitfähigkeit aufweist.

Bewährt hat sich in der Vergangenheit ein Bolzenelement zur Anbringung von Massenverbindungen, so wie es im europäischen Patent EP-B-540 030 geschützt ist.

Gefordert wird heutzutage aber auch eine elektrische Verbindung, die mittels eines Mutterelementes realisiert werden kann. Während man sich in der Vergangenheit darauf verlassen konnte, daß durch die Anbringung eines, entsprechende Formmerkmale aufweisenden Befestigungselementes an einem Blechteil eine etwaige vorhandene Schutzbeschichtung durch die Formmerkmale so verletzt wird, daß die erwünschte elektrische Verbindung zustande kommt, gestaltet es sich heute zunehmend schwieriger, dies mit Blechteilen sicherzustellen, die vorlackiert sind. Die entsprechenden Schutzbeschichtungen sind nämlich so konzipiert, daß sie auch die verschiedensten Formgebungsverfahren mitmachen, ohne verletzt zu werden. Solche Beschichtungen sind auch nicht im Tiefziehverfahren zu verletzen. Die Gefahr besteht daher bei der Anbringung von Befestigungselementen durch Nietverfahren oder Stanznietverfahren, daß eine nicht ausreichende elektrische Verbindung zwischen dem Befestigungselement und dem Blechteil entsteht. Man muß daher befürchten, daß Übergangswiderstände auftreten, die es verhindern, daß die angestrebte elektrische Funktion gewährleistet ist.

Auch werden heutzutage Blechlaminate verwendet, z.B. "Bondal" (eingetragene Marke der Firma Hoesch), bestehend aus zwei Metalllagen aus Stahl und/oder Aluminium mit einer Zwischenschicht aus Kunststoff. Solche Blechlaminate haben sehr gute Dämpfungseigenschaften, sind jedoch nur unter schwierigen Bedingungen schweißbar, so daß die Herstellung von Masseanschlüssen nur über mechanisch angebrachte Befestigungselemente möglich ist, wobei ein Masseanschluß zu beiden Blechbe- stanteilen notwendig ist, trotz der vorhandenen isolierenden Kunststoffschicht.

Die Aufgabe der vorliegenden Erfindung liegt darin, hier Abhilfe zu schaffen und sicherzustellen, daß bei Anwendung von holhen Befestigungselementen, wie Befestigungsmuttern, auch in der Serienfertigung eine qualitativ hochwertige elektrische Verbindung zwischen einem Kabelschuh oder einer Anschlußklemme und dem Blechteil zustande kommt.

Verfahrensmäßig wird diese Aufgabe durch ein Verfahren zur Herstellung einer elektrischen Verbindung zu einem eine nicht oder nur schlecht leitende Schutzschicht zufweisenden Blechteil, unter Anwendung eines hohlen Befestigungselementes, das mittels eines Nietverfahrens oder Stanz- und Nietverfahrens an das Blechteil angebracht wird, wobei ein Kabelschuh mittels einer Schraube an das hohle Befestigungselement bzw. an das Blechteil angebracht wird, in dem die Schraube durch den Kabelschuh in das hohle Befestingungselement eingeschraubt wird und dabei das Blechteil durchdringt und im Blechteil ein Gewinde ausbildes oder nachformt.

Ein entsprechndes, erfindungsgemäßes Zusammenbauteil ist dem Anspruch 9 zu entnehmen. Zwar ist aus der US-A-3,829,957 ein Verfahren bekannt, bei dem ein Blechteil mit einem weiteren Bauteil, das ein zweites Bleichteil sein kann, derart verbunden, dass ein hohles Befestigungselement mittels eines Stanz- und Nietverfahrens an das erstgenannte Blechteil angebracht wird und das weitere Bauteil bzw. Blechteil mittels einer gewindeschneidenen Schraube an das hohle Befestigungselement dadurch angebracht wird, das die Schraube durch das weitere Bauteil in das Befestigungselement eingebracht wird und dabei das erste Blechteil durchdringt und in diesem ein Gewinde ausbildet.

Ferner geht aus der US-A-3,829,957 ein Zusammenbauteil hervor bestehend aus einem Blechteil, einem mit dem Blechteil vernieteten, hohlen Befestigungselement, das zur Aufnahme einer ein weiteres Bauteil befestigenden Schraube ausgelegt ist, wobei das Blechteil ein Loch aufweist, das mit der die Schraube aufnehmenden Passage des hohlen Befestigungselementes ausgerichtet ist, das Loch einen Durchmesser oder eine minimale Querabmessung aufweist, die zumindest im wesentlichen dem Kerndurchmessers des Gewindes der Schraube entspricht oder geringfügig kleiner als dieser ist, die Schraube im hohlen Befestigungselement eingeschraubt ist und das Blechteil durchdringt und der Lochrand entsprechend dem Gewinde der Schraube ausgebildet ist, wobei die Schraube sowohl im hohlen Befestigungselement wie auch im Blechteil eingeschraubt ist.

Bei der US-A-3,829,957 wird aber als weiteres Bauteil ein ausgedehntes Bauteil oder Blechteil und nicht ein Kabelschuh vorgesehen. Ferner ist die dort gezeigte bzw. beschriebene Verbindung nicht dazu vorgesehen, eine elektrisch leitende Verbindung zwischen einem Kabelschuh und einem eine nicht leitende oder nur schlecht leitende Schutzschicht aufweisenden Blechteil vorgesehen, sondern um zu verhindern, dass das als Mutterelement ausgebildete Befestigungselement bei der Verwendung einer gewindeschneidenden Schraube aus dem Blechteil heraus gedrückt wird. Die Schrift erwähnt an keiner Stelle die mögliche Anwendung des dort beschriebenen Verfahrens mit einem eine nicht leitende oder schlecht leitende Schutzschicht aufweisenden Blechteil, geschweige denn zur Herstellung einer elektrisch leitenden Verbindung mit einem Kabelschuh.

Im Regelfall wird das Blechteil vor der Einführung der Schraube vorgelocht, wofür es mehrere Möglichkeiten gibt.

Einerseits kann das Vorlochen bei der Anbringung des Befestigungselementes mittels eines vorlaufenden Lochstempels erfolgen. Hier kann beispielsweise eine modifizierte Ausführung des Verfahrens nach der europäischen Patentanmeldung EP-A-0 759 510 zur Anwendung gelangen, wie später näher erläutert wird.

Es genügt hier, zum Ausdruck zu bringen, daß bei der Anbringung des hohlen Befestigungselementes der Lochstempel, der konzentrisch zur mittleren Passage des hohlen Befestigungselementes geführt wird, eine entsprechende Lochung im Blechteil erzeugt, bevor die das Blechteil abstützende Matrize für Einformung des Blechteils in einen Hohlraum des Befestigungselementes sorgt.

Werden die hohlen befestigungselemente in Blechteile in einem Folgeverbundwerkzeug eingebracht, kann das Vorlochen des Blechteils in einer Station des Folgeverbundwerkzeuges erfolgen, während die Anbringung des hohlen Befestigungselementes in Ausrichtung mit der so erzeugten Lochung in einer nachfolgenden Station des Folgeverbundwerkzeuges erfolgen kann.

Das Blechteil kann aber auch nachgelocht werden, beispielsweise in einer Variante eines Verfahrens, das in der EP-B-0 533 822 oder EP-A-0 669 473 beschrieben ist. Bei einem Verfahren wird die Verbindung des Befestigungselementes mit dem Bleichteil erst bewerkstelligt, ohne das Blechteil zu lochen. Der nachlaufende Lochstempel wird anschließend durch die mittlere Passage des Befestingungselementes geführt, um die entsprechende Lochung im Blechteil durchzuführen.

Bei der Anwendung eines Folgeverbundwerkzeuges zur Anbringung der hohlen Befestingungselemente an Blechteilen kann die Anbringung der Befestigungselemente in einer Station des Folgeverbundwerzeuges erfolgen, während das Nachlochen in einer nachfolgenden Station des Folgeverbundwerkzeuges durchgeführt wird.

Bei einer bevorzugten Ausführungsform wird ein kreisförmiges Loch im Blechteil durch den Lochtempel gebildet und zwar mit einem Durchmesser, der zumindest im wesentlichen dem Kerndurchmesser der Schraube entspricht oder geringfügig kleiner als dieser ist. Sinn dieser Gestaltung des Loches ist, daß die Schraube, die als gewindeformende oder - schneidende Schraube ausgelegt sein kann, ein Gewinde in das Blechteil, und ggf. auch in das hohle Befestigungselement, schneidet bzw. formt, wobei das Gewinde im Blechteil so geformt wird, daß eine innige, formschlüssige Verbindung erreicht wird, d.h. das Blechteil wird in das Gewinde der Schraube eingeformt.

Ein kreisförmiges Loch ist aber nicht zwangsläufig erforderlich. Ein Lochstempel könnte zur Anwendung gelangen, der einen polygonalen oder sternförmigen oder Verzahnung aufweisenden Querschnitt hat. Durch die so entstehenden Ecken oder Zähne des Lochrandes wird eine hochwertige elektrische Verbindung über die Schraube zum Kabelschuh bzw. zu der entsprechenden Anschlußklemme sichergestellt. Eine etwaige Herausbiegung der so entstehenden Zähne oder Spitzen kann auch bei der direkten Anbringung des Kabelschuhs auf dem Blechteil zu einer Verletzung der Oberfläche des Kabelschuhs führen, wodurch etwaige Oxidschichten durchbrochen werden und eine qualitativ hochwertige elektrische Verbindung erreicht wird.

Besonders bevorzugte Ausführungsformen des erfindungsgemäßen Verfahrens bzw. Zusammenbauteils sind den Unteransprüchen zu entnehmen.

Die Erfindung wird nachfolgend näher erläutert aufgrund von Ausführungsbeispielen unter Bezugnahme auf die Zeichnungen. Die Fig. 1 bis Fig. 8 entsprechen im wesentlichen denen der EP-A-0 759 510 A1, wobei jedoch diese Figuren modifiziert wurden, um die abgewandelte Form des Lochstempels, die abgewandelte Form der mittels des Lochstempels erfolgten Lochung und die Auswirkung der Schutzbeschichtung, die sich auf dem Blechteil befindet, zu zeigen. Die Zeichnungen zeigen:
- Fig. 1: eine Draufsicht auf der Stirnseite eines hohlen Befestigungselementes, das zum Zweck der Erfindung eingesetzt werden kann, wobei der Einfachheit halber lediglich die Hälfte des Befestigungselementes gezeigt wird,
- Fig. 2: eine teilweise geschnittene Seitenansicht des Befestigungselementes der Fig. 1,
- Fig. 3: eine schematische Darstellung der ersten Phase eines erfindungsgemäßen Verfahrens zur Anbringung des Befestigungselementes nach Fig. 1 und 2 an ein plattenförmiges Bauteil, wobei die Fig. 3a die Stirnseite der verwendeten Matrize zeigt,
- Fig. 4: eine spätere Phase des erfindungsgemäßen Verfahrens kurz vor der Lochung des plattenförmigen Bauteiles,
- Fig. 5: eine spätere Phase des erfindungsgemäßen Verfahrens gerade nach der Lochung des plattenförmigen Bauteiles,
- Fig. 6: eine noch spätere Phase des erfindungsgemäßen Verfahrens bei der Umformung des plattenförmigen Bauteiles,
- Fig. 7: das Ende des erfindungsgemäßen Verfahrens nach der Anbringung des Befestigungselementes an das plattenförmige Bauteil, wobei die Fig. 7A die Anordnung der Matrize im unteren Werkzeug zeigt,
- Fig. 8: eine teilweise geschnittene Seitenansicht des erfindungsgemäßen Zusammenbauteils bestehend aus dem Befestigungselement und einem Blechteil,
- Fig. 9: die Anbringung eines Kabelschuhs auf das aus dem Befestigungselement und Blechteil hergestellte Zusammenbauteil gemäß Fig. 8,
- Fig. 10: die fertige Verbindung,
- Fig. 11: eine detaillierte Darstellung der elektrischen Verbindung zwischen der Schraube und dem Blechteil,
- Fig. 12: eine alternative Möglichkeit zur Anbringung eines Kabelschuhs auf das Zusammenbauteil der Fig. 8,
- Fig. 13: eine teilweise geschnittene Ansicht der Anbringung eines hohlen Elementes auf ein Blechteil entsprechend dem europäischen Patent EP-B-0 533 822, jedoch mit einem modifizierten Lochstempel und einer modifizierten Matrize, um ein Zusammenbauteil zu erzeugen, das entsprechend der vorliegenden Erfindung ausgelegt ist, und
- Fig. 14: eine schematische Darstellung der erfindungsgemäßen Anbringung eines Kabelschuhs an das Zusammenbauteil der Fig. 13.

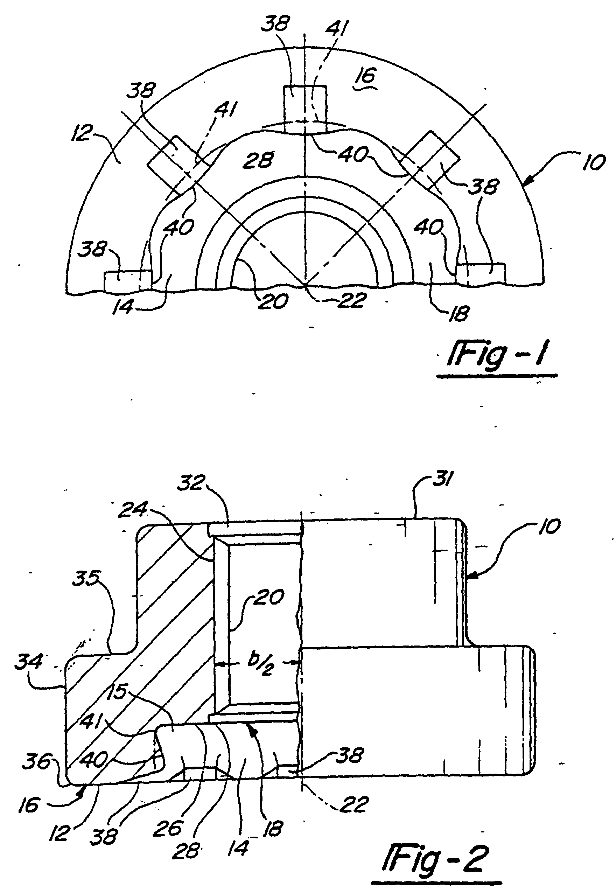

Nach den Fig. 1 und 2 besteht das hohle Befestigungselement 10 gemäß der EP-A-0 759 510 aus einem im wesentlichen zylinderförmigen Körper aus Metall, mit einer Stirnfläche 12 welche nach der Anbringung des Elementes an einem plattenförmigen Bauteil diesem zugewandt ist. Die Stirnfläche 12 weist eine ringförmige Vertiefung 14 auf welche innerhalb einer erhabenen ringförmigen Anlagefläche 16 angeordnet ist, wobei die Bodenfläche 18 der ringförmigen Vertiefung sich bis zü der Bohrung 20 des Befestigungselementes 10 erstreckt. Die Bohrung 20 weist eine mittlere Achse 22 die zugleich die Längsachse des Befestigungselementes darstellt, auf und ist hier als eine Gewindebohrung mit Gewinde 24 ausgebildet, so daß das hier gezeigte Befestigungselement ein Mutterelement ist.

Die Bodenfläche 18 der ringförmigen Vertiefung 14 geht über eine Ringschulter 26 in eine Ringfläche 28 über wobei der Außendurchmesser der Ringfläche 28 geringfügig größer ist als der Außendurchmesser D des in der Bohrung 20 vorgesehenen Gewindes 24. Man merkt, daß die Bohrung 20 bzw. das Gewinde 24, die Ringfläche 28, die Ringschulter 26 und die ringförmige Vertiefung 14 sowie auch die Anlagefläche 12 koaxial zur mittleren Achse 22 des Befestigungselementes 10 liegen. Die weitere Stirnfläche 30 des Befestigungselementes ist in diesem Beispiel flach ausgebildet und lediglich mit einer kleinen Versenkung 32 versehen, welche einen sauberen Übergang zum Gewinde 24 bildet.

Die abgestuft ausgebildete Mantelfläche 34 des Befestigungselementes geht über einen kleinen Radius 36 in die Stirnfläche 12 über, wobei dieser Radius 36 vorzugsweise kleiner als 0,5 mm beispielsweise 0,3 mm ausgeführt ist.

In der ringförmigen Anlagefläche sind in diesem Beispiel acht Vertiefungen 38 vorgesehen, welche, wie aus der Fig. 2 ersichtlich, in etwa keilförmig ausgestaltet sind und ihre größte Tiefe beim Übergang in die Seitenwand 15 der ringförmigen Vertiefung 14 aufweisen. In Draufsicht sind die Vertiefungen 38 in etwa rechteckig wie aus der Fig. 1 ersichtlich. Diese Vertiefungen werden beim Kaltschlagen während der Herstellung des Mutterelementes erzeugt und die entsprechende Verformung des Hohlkörperrohlings führt zu wulstartigen Vorsprüngen 40 in der Seitenwand der ringförmigen Vertiefung 14 wobei diese Vorsprünge wie auf der linken Seite der Fig. 2 deutlich zu sehen zu lokalen Hinterschneidungen 41 in der Seitenwand der ringförmigen Vertiefung 14 führen.

Als Werkstoffe für die Befestigungselemente eignen sich alle Materialien, die im Rahmen der Kaltverformung die Festigkeitswerte der Klasse 8 gemäß Isostandard erreichen, beispielsweise eine 35 B2-Legierung gemäß DIN 1654. Die so gebildeten Befestigungselemente bzw. Mutterelemente eignen sich unter anderem für alle handelsüblichen Stahlwerkstoffe für ziehfähige Blechteile wie auch für Aluminium oder deren Legierungen. Die Muttern können auch in anderen Werkstoffen ausgebildet werden, beispielsweise in einer Aluminiumlegierung, insbesondere in einer Aluminiumlegierung höherer Festigkeit.

Es versteht sich, daß in der Fig. 2 die Ausbildung des Mutterelementes auf der rechten Seite der mittleren Achse 22 identisch ist wie auf der linken Seite.

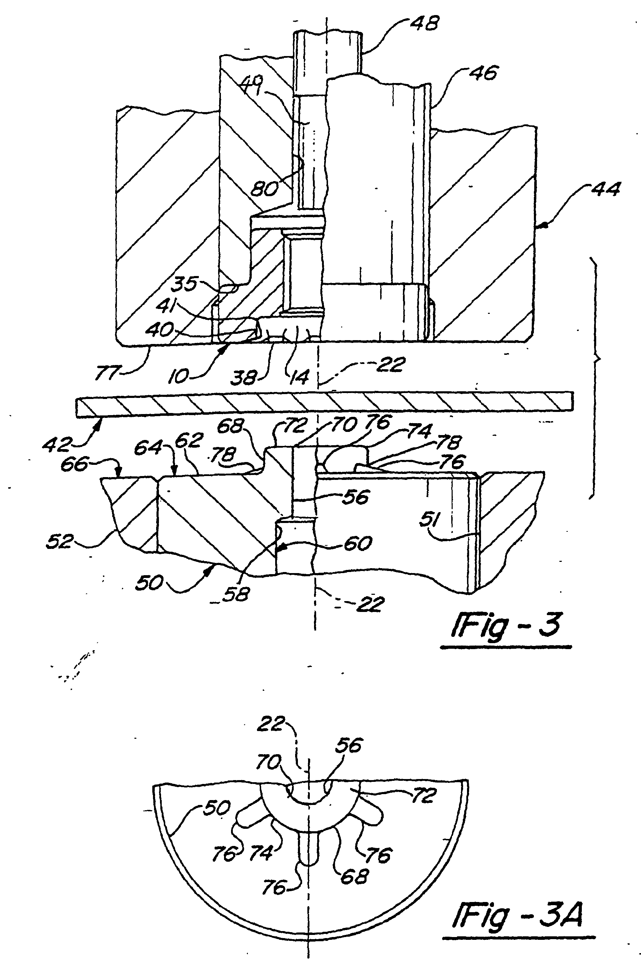

Die Art der Anbringung des Befestigungselementes nach den Fig. 1 und 2 in ein plattenförmiges Bauteil in Form eines Blechteils 42 wird nachfolgend anhand der Fig. 3 bis 8 näher erläutert.

In der Fig. 3 wird das erfindungsgemäße Befestigungselement 10 in einem nur teilweise dargestellten Setzkopf 44 gezeigt, der einen Stempel 46 sowie einen koaxial zum Stempel 46 angeordneten Lochstempel 48 aufweist. Ein Setzkopf dieser Art ist für sich im Prinzip aus den oben erwähnten deutschen Druckschriften, d.h. DE-PS 34 46 978 und DE-OS 38 35 556.3 bekannt. Der Lochstempel 48, hier als sogenannter vorlaufender Lochstempel realisiert, hat an seinem vorderen ende einen zylindrischen Abschnitt 49 kleineren Durchmessers, der den eigentlichen Lochvorgang durchführt, wie später näher erläutert wird.

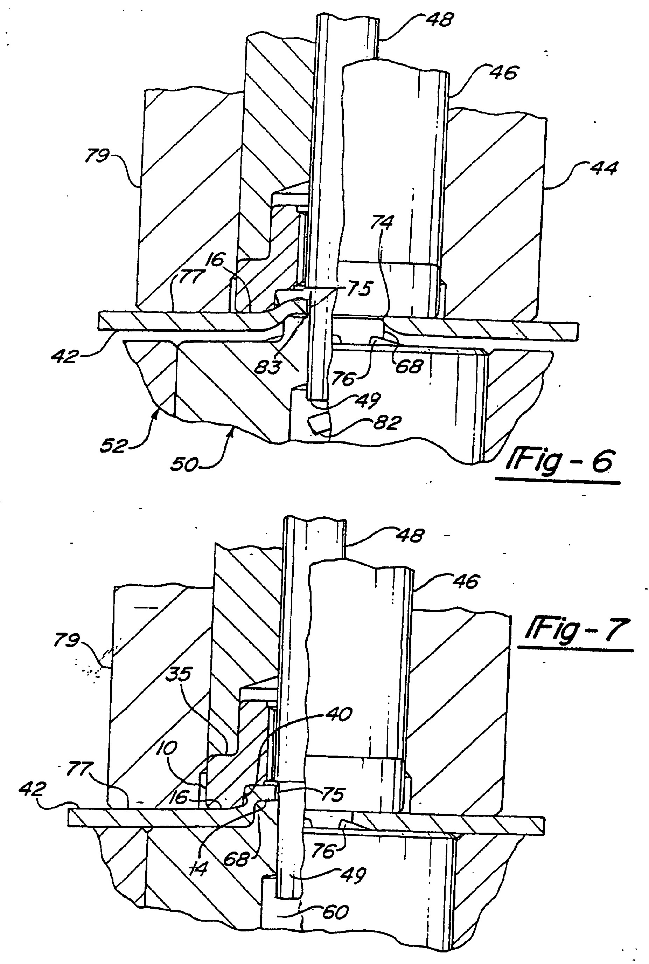

Unterhalb des Blechteiles 42 befindet sich eine Matrize 50 welche, wie in der Fig. 7A dargestellt beispielsweise als zylindrisches Bauteil in einer zylindrischen Bohrung 51 eines unteren Werkzeuges 52 einer Presse eingesetzt ist und in der richtigen Höhe bündig mit der Oberfläche des unteren Werkzeuges 52 mittels eines Abstandhalters 54 gehalten wird. Die Matrize 50 weist eine mittlere Bohrung 56 auf die über eine Ringschulter 58 in eine größere Bohrung 60 übergeht. Das Stirnende 62 der Matrize 50 weist eine ebene Fläche 64 auf welche bündig mit der Oberfläche 66 des unteren Werkzeuges 52 liegt. Weiterhin weist das Stirnende der Matritze 50 einen Formlochabsatz 68 auf. Die Bohrung 56, welche das Loch des Formlochabsatzes 68 bildet, hat eine ringförmige Schneidkante 70, der einen Innendurchmesser aufweist, der dem Durchmesser des zylindrischen Abschnitts 49 des Lochstempels 48 entspricht, d.h. nur geringfügig größer ist wie bei Lochstempeln üblich. Dieser Durchmesser ist deutlich kleiner als der Kernlochdurchmesser des hohlen Befestigungselementes, d.h. des Gewindezylinders 24. Der Grund hierfür wird später erläutert. Die zur Längsachse 22 koaxial angeordnete Stirnfläche 72 der Matrize, welche zumindest im wesentlichen senkrecht zu dieser Achse liegt, weist am Übergang zu der Mantelfläche des Formlochabsatzes 68 eine gerundete Ziehkante 74 auf.

Um den Formlochabsatz in Abständen herum angeordnet befinden sich mehrere Nasen 76, wobei in diesem Beispiel sechs solcher Nasen vorgesehen sind, die gleichmäßig um den Formlochabsatz 68 herum angeordnet sind. Die Nasen 76 haben eine Schrägfläche 78 und sind sowohl an der Mantelfläche des Formlochabsatzes 68 wie auch der ebenen Stirnfläche 64 der Matrize 50 erhaben ausgebildet.

Die Nasen 76, die insgesamt an allen Flächen gerundet sind, sind etwas schmäler ausgebildet als die Vertiefungen 38 in der ringförmigen Anlagefläche 16 des Mutterelementes 10. Durch die Verwendung der gleichen Bezugszeichen 22 wird deutlich gemacht, daß der Lochstempel 48, der Stempel 46, die untere Stirnfläche 77 des Setzkopfes, das Hohlelement 10 und die Matrize 50 des unteren Werkzeuges 52 wie auch die Bohrung 56 und die Bohrung 60 der Matrize und schließlich auch der Durchgangsbohrung des Abstandshalters 54 alle koaxial angeordnet sind.

Der Setzkopf 44 selbst ist in an sich bekannter Weise an dem oberen Werkzeug einer Presse angeordnet und wird, in der üblichen Art und Weise so ausgestaltet, daß die jeweiligen Mutterelemente 10 über einen Schrägkanal in die Bohrung 80 des Setzkopfes 44 gelangen und anschließend mittels des Stempels 46 beim Schließen der Presse bis zu dem Stirnende des Setzkopfes geführt werden. Die Mutterelemente können auch während dieser Bewegung gehalten werden wofür Vorrichtungen bekannt sind, beispielsweise aus der PCT-Anmeldung mit der Veröffentlichungsnummer WO 93/19890.

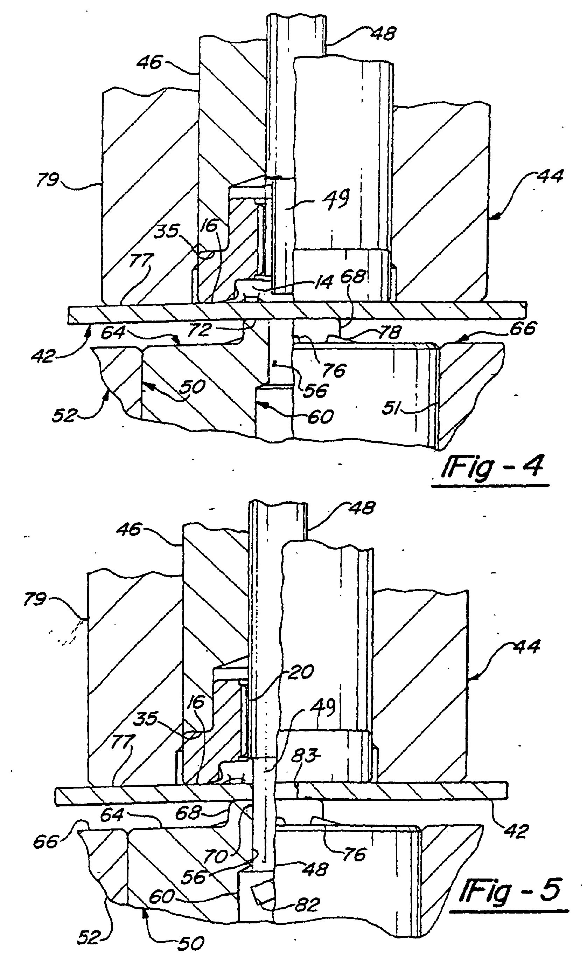

Beim Schließen der Presse, beispielsweise zur Formgebung des Blechteils durch das untere Werkzeug 52 in Kombination mit einem oberen nicht gezeigten Werkzeug, bewegt sich der Setzkopf aus der Stellung der Fig. 3 in die Stellung nach Fig. 4. Das untere Stirnende 77 des Setzkopfes 44 gelingt auf diese Weise in Anlage an das Blechteil 42 und dieses wird wiederum gegen die Stirnfläche 72 der Matrize 50 gepreßt. Eine weitergehende Bewegung des als Niederhalter für das Blechteil 42 dienenden Gehäuses 79 des Setzkopfes nach unten wird in diesem Stadium verhindert, das Gehäuse 79 des Setzkopfes weicht gegenüber dem nach unten sich bewegenden Werkzeug der Presse etwas zurück. Dies gilt auch für den Stempel 46, der vorteilhafterweise gegen die Ringschulter 35 des Befestigungselementes drückt und nicht gegen die Stirnfläche 31, wodurch die Gefahr der Beschädigung des Gewindes 34 wirksam vermieden wird. Das obere Werkzeug der Presse treibt aber den Lochstempel weiter nach unten zunächst in die Stellung nach der Fig. 5. Dabei wird vom Lochstempelabschnitt 49 in Zusammenarbeit mit der Schneidkante 70 des Formlochabsatzes 68 der Matrize 50 ein Butzen 82 aus dem Blechteil 42 geschnitten, wie in der Folgezeichnung der Fig. 5 dargestellt ist. Auf diese Weise entsteht ein Stanzloch 83 im Blechteil 42. Aus dieser Zeichnung merkt man, daß der Lochstempelabschnitt 49 gleitend in die Bohrung 56 der Matrize 50 aufgenommen wird.

Der Butzen 82 kann durch die Bohrung 60 der Matrize 50 entsorgt werden, wobei der große Durchmesser dieser Bohrung 60 im Vergleich zu der Bohrung 56 dafür sorgt, daß der Butzen sich unter Schwerkraft leicht bewegt und nicht hängenbleibt.

Bei der weiteren Schließbewegung der Presse wird, wie in Fig. 6 gezeigt auch das Gehäuse 79 des Setzkopfes 44 und der Stempel 46 gemeinsam weiter nach unten bewegt, wodurch der Formlochabsatz 68 oder genauer gesagt die gerundete Ziehkante 74 des Formlochabsatzes einen Kragen 75 aus dem Blechwerkstoff um das Stanzloch 83 herum unter Aufweitung des Stanzloches 83 ausbildet. Diese Verformung setzt sich bis zum Endstadium wie in der Fig. 7 gezeigt, fort und man sieht aus der Fig. 7 das der Formlochabsatz 68 das Blechmaterial bzw. den Kragen 75 so verformt hat, daß diese formschlüssig in der ringförmigen Vertiefung 14 des Befestigungselementes und in den Hinterschneidungen 40 hineingepreßt wird.

Der Durchmesser des Stanzloches 83 vor deren oben erwähnten Aufweitung entspricht dem Durchmesser des zylindrischen Abschnitts 49 des Lochstempels 48 und wird so gewählt, daß nach der Aufweitung das erweiterte Stanzloch einen Innendurchmesser aufweist, der zumindest im wesentlichen identisch ist mit dem Kerndurchmesser des Gewindezylinders oder geringfügig kleiner als dieser.

Durch die unterschiedliche Zahl der Nasen 46, im Vergleich zu der Zahl der Vertiefungen 38 in der ringförmigen Anlagefläche 16 des Befestigungselementes wird sichergestellt, daß mindestens eine Nase vollständig mit einer Vertiefung 38 zur Deckung kommt und zwar ohne daß Maßnahmen getroffen werden müssen, um die Drehposition des Befestigungselementes um die mittlere Achse 22 herum sicherzustellen. Auch bei anderen Vertiefungen 38 kann mit einer zumindest teilweisen Deckung mit Nasen der Matrize gerechnet werden, so daß auch hier eine formschlüssige Anlage erfolgt, wodurch die Verdrehsicherung sichergestellt ist.

Nachdem die wulstartigen Vorsprünge 40, welche die Hinterschneidungen bilden, ebenfalls zu einer gewellten Oberfläche der Seitenwand der ringförmigen Vertiefung 14 führen liefert die formschlüssige Anlage des Blechteils an dieser Seitenwand ebenfalls einen bedeutenden Beitrag zu der Verdrehsicherheit der Verbindung.

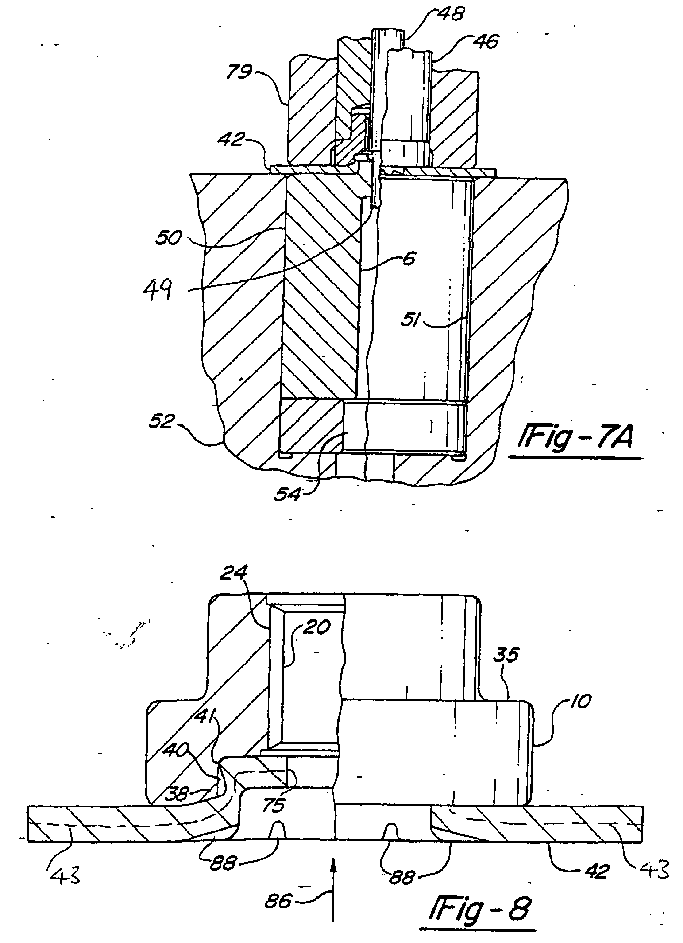

Nach dem Verfahrensstand gemäß Fig. 7 öffnet sich die Presse wieder und das Werkstück 42 mit dem angebrachten Befestigungselement wird aus der Presse ausgestoßen bzw. aus der Presse entnommen und stellt sich dann so wie in Fig. 8 dargestellt dar. Man sieht aus der Fig. 8, daß der Innendurchmesser des Kragens 75 des Blechteiles 42 etwas kleiner ist als der Innendurchmesser des Gewindes 24, so daß das Blechteil entgegen der bisherigen Funktion des Befestigungselementes zunächst die Einführung eines Bolzens verhindern kann. Der in das Gewinde 24 passende Bolzen wird üblicherweise in Pfeilrichtung 86 der Fig. 8 eingeführt und dient üblicherweise dazu, ein zweites Blechteil an dem Blechteil 42 zu befestigen. Die durch die Nasen 76 im Blechteil erzeugten Vertiefungen 88 sind auch in der Fig. 8 ersichtlich.

Das Blechteil 42 der Fig. 8 ist durch eine gestrichelte Linie 43 unterteilt, wobei diese Linie auf die Möglichkeit hindeutet, Blechlaminate zu verwenden, wobei die Linie 43 die Kunststoffschicht zwischen zwei Blechbestandteilen aus Stahl und/oder Aluminium darstellt.

Obwohl die hier gezeigten Befestigungselemente alle eine kreiszylindrische Mantelfläche aufweisen, d. h. in Draufsicht einen kreisförmigen Querschnitt aufweisen, können durchaus auch andere Querschnittsformen, beispielsweise polygonalen oder ovalen oder Nuten aufweisenden Querschnittsformen zur Anwendung gelangen. Auch wird der Ausdruck ringförmig so verstanden, daß dies nicht nur Kreisringe, sondern auch von einer Kreisfingform etwas abweichende Ringformen, wie beispielsweise ein Polygon umfaßt.

Auch die Seitenwand 41 der ringförmigen Vertiefung 14 kann sich als Polygon oder mehrseitige Figur darstellen.

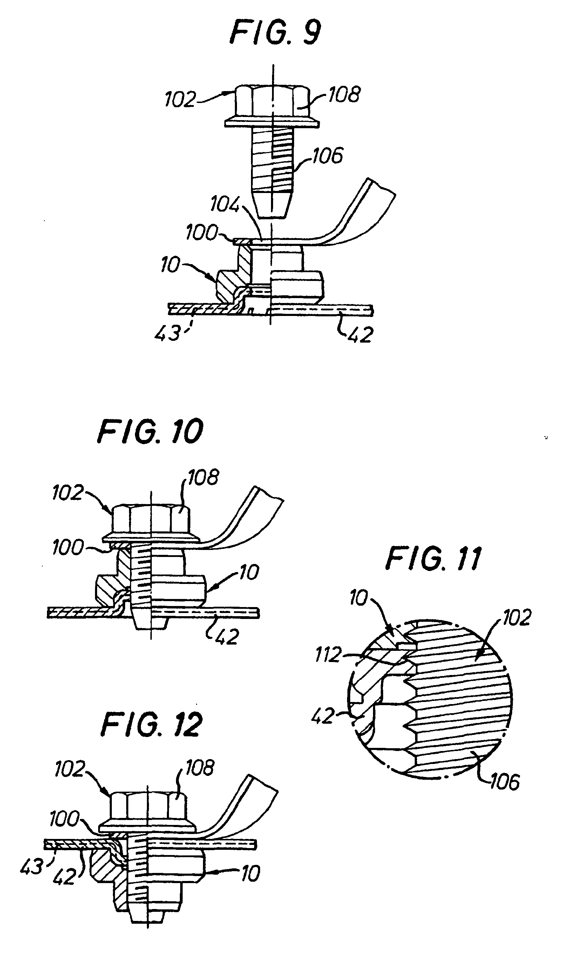

Fig. 9 zeigt nunmehr, wie ein Kabelschuh 100 mittels einer Schraube 102 an das Zusammenbauteil bestehend aus dem hohlen Befestigungselement 10 und dem Blechteil 42 angebracht wird. Im Unterschied zu dem hohlen Befestigungselement nach den bisherigen Figuren ist hier lediglich als Alternative eine Ausführung gezeigt, bei der der Gewindezylinder 24 noch nicht vorliegt, d.h. die entsprechende mittlere Passage des Befestigungselementes einen Innendurchmesser entsprechend dem Kerndurchmesser des Gewindes aufweist.

Der Kabelschuh 100, der auch eine Anschlußklemme sein könnte, beispielsweise als Befestigungslasche für eine Zündspule realisiert, weist ein Loch 104 auf mit einem Durchmesser etwas größer als der Außendurchmesser des Gewindeteils 106 der Schraube 102, so daß die Schraube durch den Kabelschuh 104 ohne Widerstand hindurchgeführt werden kann. Es handelt sich bei der Schraube 102 um eine sogenannte Taptite Schraube (eingetragene Marke), die am Markt erhältlich ist und eine gewindeformende Schraube darstellt.

Die gewindeformende Schraube 102 wird auf das hohle Befestigungselement aufgesetzt und in diese eingeschraubt mittels eines geeigneten Werkzeuges, das am Kopfteil 108 der Schraube angreift.

Die Gewindegänge der Schraube formen während der Einschraubbewegung eine spalt- und setzungsfreie Verbindung sowohl mit dem Befestigungselement als auch mit den Lochwandungen des Blechbauteils und erzeugen damit einen innigen Kontakt mit der Befestigungsschraube für das Massekabel. Das heißt, daß die elektrische Verbindung vom Kabelschuh in die Schraube hinein und vom Gewindeteil der Schraube in das Blechteil hinein erzeugt wird. Dabei ist es unwesentlich, ob das Befestigungselement 10 selbst mit einem Lack beschichtet ist oder lediglich eine metallische Schutzbeschichtung gegen Rost aufweist. Die elektrische Verbindung zwischen der Schraube und dem Kabelschuh kann.ggf. durch herkömmliche Mittel, beispielsweise einem mit Zacken ausgestatteten Sicherungsring, verbessert werden.

Es ist nicht unbedingt erforderlich, daß die Schraube selbst das Gewinde in das hohle Befestigungselement formt. Das Befestigungselement 10 kann, wie in den fig. 1 bis 8 gezeigt, als Mutterelement realisiert werden und würde dann nur als Führung für die Schraube dienen, die aber als Gewinde in das Blechteil zu schneiden hat. Allerdings wäre es auch möglich, das Gewinde im Blechteil vorzuformen, ggf. mit Untermaß, und nur dann in die endgültige Form zu bringen, wenn die Schraube eingeschraubt wird.

Fig. 10 zeigt die fertige Verbindung. Die ringförmige Anlage der Unterseite des Kopfteils der Schraube an den Kabelschuh und des Kabelschuhs an das Mutterelement stellt eine hochwertige elektrische Verbindung zwischen Schraube und Kabelschuh dar, die durch einen ringförmig mit Zakken versehenen Sicherungsring gegebenenfalls noch verbessert werden kann. Besonders günstig ist die vollflächige Abstützung des Kabelschuhs über die volle Fläche der ringförmigen Anlage durch das Mutterelement.

Fig. 11 zeigt, wie ein Gewindegang 112 des Schaftteils 106 der Schraube 102 einen entsprechenden Gewindegang in das Blechteil 42 eingeformt hat. Anstelle einer gewindeformenden Schraube kann auch eine gewindeschneidende Schraube verwendet werden.

Fig. 12 zeigt eine weitere Anbringungsmöglichkeit der Schraube. Hier befindet sich das Kopfteil 108 der Schraube auf der dem Mutterelement 10 abgewandten Seite des Blechteils. Auch hier besteht die elektrische Verbindung vom Kabelschuh über die Schraube in das Blechteil hinein. Die Anordnung gemäß Fig. 12 hat den zusätzlichen Vorteil, daß die Schraube die Verbindung zwischen dem hohlen Befestigungselement 10 und dem Blechteil 42 unterstützt, fordert aber unter Umständen eine etwas großflächigere Ausbildung des Kabelschuhs 100 bzw. der Auflagefläche des Kopfteils 108 der Schraube, damit die Flächenpressung am Kabelschuh bzw. an der Schraube in vertretbaren Grenzen bleibt. Ansonsten gelten für die Fig. 12 Ausführung alle Details wie für die Ausführung gemäß Fig. 9 bis 11. Das heißt, es kann unter anderem eine gewindeformende oder eine gewindeschneidende Schraube zum Einsatz gelangen.

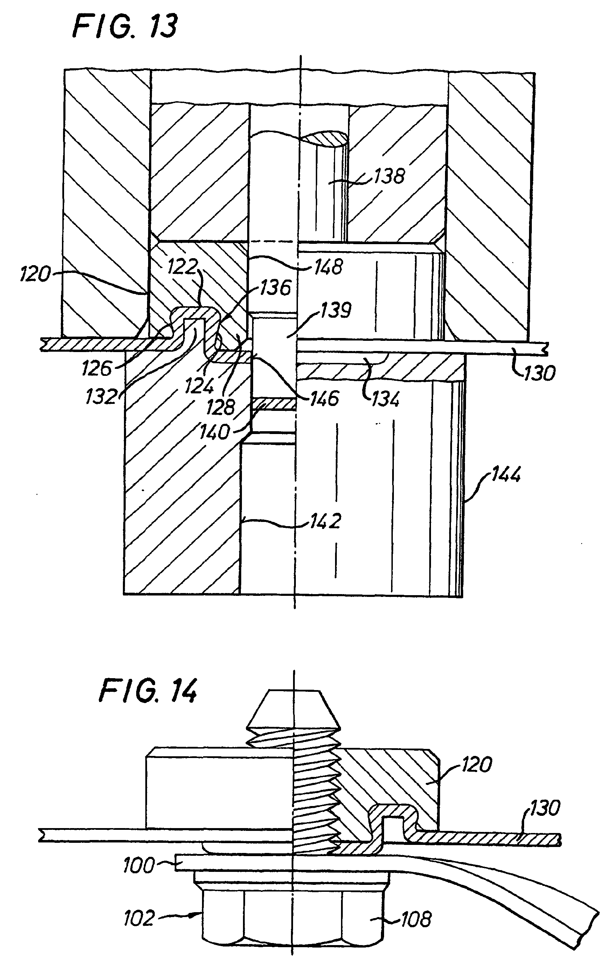

Auch bei der Ausführung gemäß Fig. 14 erfolgt eine ringförmige Anlage der Unterseite des Kopfteils der Schraube an den Kabelschuh und eine ringförmige Anlage des Kabelschuhs am Blechteil, und zwar in dem Bereich wo das Blechteil ringförmig und vollflächig an der ringförmigen Anlagefläche 12 des Mutterelements abgestützt wird, so daß auch hier eine qualitativ hochwertige elektrische Verbindung zwischen der Schraube und dem Kabelschuh erreicht wird.

Die elektrische Verbindung gemäß der vorliegenden Lehre kann nicht nur mit einem Element entsprechend der europäischen Anmeldung EP-A-0 759 510 A1 erzielt werden. Im Grunde genommen kommen alle bekannten Mutterelemente und Blechverbindungen in Frage, wo die Möglichkeit besteht, das Blechteil im Bereich der entsprechenden Passagenöffnung des hohlen Befestigungselementes stehen zu lassen und mit einer Lochung zu versehen, die zumindest im wesentlichen dem Kemdurchmesser des Gewindes der Schraube entspricht. Mit anderen Worten kann die vorliegende Erfindung mindestens bei Befestigungselement-Blechverbindungen verwendet werden, wie sie im deutschen Patent 34 01 118, im europäischen Patent 0 533 822, im europäischen Patent 0 6569 473 oder in der noch nicht veröffentlichten europäischen Patentanmeldung 97 116 188.0 beschrieben ist.

Es handelt sich bei den oben genannten Schutzrechten um solche, die von der Firma Profil Verbindungstechnik GmbH & Co. KG stammen oder an denen die Firma Profil Rechte erworben hat. Jedoch können auch Konkurrenzprodukte modifiziert werden, um von der vorliegenden Erfindung Gebrauch zu machen. Beispielsweise könnte das im europäischen Patent EP-B-0 663 247 gezeigte Element zur Realisierung eines Zusammenbauteils entsprechend der vorliegenden Anmeldung modifiziert werden.

Um diesen Gedanken weiter zu erläutern, wird nachfolgend auf die Fig. 13 und 14 verwiesen.

Fig. 13 zeigt im Prinzip das Mutterelement nach dem europäischen Patent 0 533 822, die Zeichnung kann jedoch als stellvertretend für die Mutterelemente nach der europäischen Patentanmeldung EP-A-0 669 473 oder dem europäischen Patent EP-B-663 247 verstanden werden. Das Element, hier mit dem Bezugszeichen 120 gekennzeichnet, weist eine ringförmige Vertiefung 122 auf mit einer radial inneren Seitenwand 124 und einer radial äußeren Seitenwand 126, wobei die radial innere Seitenwand der ringförmigen Vertiefung 122 die radial äußere Wand eines zylindrischen Vorsprungs 128 darstellt, der bei der bisherigen Verwendung des Mutterelementes als zylindrischer Stanzabschnitt diente. Wesentlich bei einem Element dieser Art ist, daß entweder die radial äußere Seitenwand 126 und/oder die radial innere Seitenwand 124 zumindest stellenweise hinterschnitten ist, so daß der Eingang zur ringförmigen Ausnehmung 122 im Bereich der Auflagefläche des entsprechenden Elementes 120 am Blechteil 130 kleiner ist als die Bodenfläche der ringförmigen Ausnehmung 122, um eine entsprechende Verhakung mit dem Blechteil zu ermöglichen. Die Matrize weist eine ringförmige Nase 132 auf, die bei der Anbringung des Elementes Blechmaterial in die ringförmige Vertiefung 122 hineindrückt. Verschiedene Formgebungsmöglichkeiten sind gegeben, um eine Verdrehsicherung zu bewerkstelligen. Diese sind jedoch nicht Bestandteil der vorliegenden Erfindung und sind für sich erläutert in den genannten Patentschriften bzw. -anmeldungsunterlagen. Sie werden hier nicht näher beschrieben.

Wesentlich bei der vorliegenden Ausführungsform sind zwei Merkmale.

Einerseits ist die Matrize an ihrer Stirnseite mit einer ringförmigen Vertiefung 134 versehen, so daß bei der Herstellung der Verbindung zwischen dem Element und dem Blechteil der zylindrische Abschnitt 128 keine Stanzwirkung ausüben kann, sondern lediglich das Blechteil so verpreßt, daß eine topfartige Vertiefung 136 entsteht.

Bei dieser Ausführungsform kommt ein nachlaufender Lochstempel zur Verwendung. Das heißt, nach der Herstellung der Verbindung gemäß Fig. 13 wird der Lochstempel 138, der entsprechend dem Lochstempel 48 der Ausführungsform gemäß Fig. 1 bis 8 ausgebildet ist und einen zylindrischen Bereich kleineren Durchmessers 139 aufweist, nach unten gedrückt, so daß der Durchmesser einen kleineren Abschnitt am vorderen Ende des Lochstempels in Zusammenarbeit mit der Matrize einen Stanzbutzen 140 aus dem Blechteil 130 herausstanzt, wobei dieser Stanzbutzen 140 über die mittlere Passage 142 der Matrize 144 in der üblichen Art und Weise entsorgt werden kann. Während dieses Vorganges bildet der vordere Abschnitt 139 des Lochstempels eine kreisförmige Öffnung 146 im Blechteil 130 mit einem Durchmesser, der geringfügig kleiner ist als der Innendurchmesser der mittleren Passage 148 des hohlen Befestigungselementes 120, das noch nicht mit einem Gewinde versehen ist. Hier ist keine Erweiterung des Stanzbolzens zu erwarten oder erforderlich, da das Blechteil 130 bereits seine endgültige, formschlüssige Verbindung mit dem Befestigungselement 120 aufweist.

Nach der Entfernung des Zusammenbauteils aus der Presse, d.h. dem Zusammenbauteil bestehend aus dem Blechteil 130 mit dem damit vernieteten Mutterelement 120, kann ein Kabelschuh oder eine Anschlußklemme 100 an das Zusammenbauteil mittels einer entsprechenden Schraube 102 befestigt werden, wie in Fig. 14 gezeigt. Dabei schneidet oder formt die gewindeschneidende bzw. gewindeformende Schraube 102 ein Gewinde sowohl im Blechteil 130 wie auch in der Umwandung der mittleren Passage 148 des hohlen Befestigungselementes 120, so daß eine hochwertige elektrische Verbindung erzeugt wird, die vom Kabelschuh über die Schraube in das Blechteil 130 hineinverläuft. Dadurch, daß die in Fig. 14 untere Stirnfläche des zylindrischen Abschnittes 128 des hohlen Befestigungselementes 120 etwas weiter nach unten ragt als die Auflagefläche im Randbereich des hohlen Befestigungselementes 120, wird sichergestellt, daß der Kabelschuh 100 Berührung mit dem mittleren Teil des Blechteils hat und daher eine ausreichende Anpreßkraft zwischen dem Kopfteil 108 der Schraube und dem Kabelschuh 100 sichergestellt wird, was der elektrischen Verbindung zugute kommt. Es liegt auch hier eine ringförmige Anlage zwischen dem Blechteil und dem Kabelschuh und der Schraube im Bereich des Kabelschuhs vor sowie eine vollflächige ringförmige Abstützung des Blechteils am Mutterelement, was ebenfalls der Qualität der elektrischen Verbindung zugute kommt. Auch hier könnte ein mit Zacken versehener Sicherungsring zur Anwendung gelangen, falls man dies für erforderlich hält.

Grundsätzlich könnte bei der Ausführung gemäß Fig. 14 die Schraube aber auch von der anderen Seite eingeführt werden, so wie in der Fig. 10 Ausführung gezeigt.

Wenn die Schraube sowohl das Gewinde im Mutterelement 120 wie auch im Blechteil erzeugt, muß die Verbindung zwischen dem hohlen Befestigungselement 120 und dem Blechteil eine ausreichende Festigkeit aufweisen, damit das entsprechende Drehmoment, das während des Gewindeschneidens bzw. -formens entsteht, nicht zur Lösung der Verbindung zwischen dem Element 120 und dem Blechteil 130 führt.

Selbst wenn bei den bisher beschriebenen Ausführungsformen stets mit einem vorlaufenden oder nachlaufenden Lochstempel gearbeitet würde, so bestünde schließlich auch die Möglichkeit, das entsprechende Loch im Blechteil mittels einer gewindebohrenden Schraube zu erzeugen, die entsprechend positioniert bzw. geführt werden muß, wozu die hohle Passage bzw. der Gewindezylinder des Befestigungselementes dienen könnte, wobei allerdings diese Ausführungsform nicht im Vordergrund des Interesses steht, da die Gefahr in Kauf genommen werden muß, daß das Blechteil sich vom Mutterelement lösen könnte.

## Patentansprüche

1. Verfahren zur Herstellung einer elektrischen Verbindung zu einem eine nicht oder nur schlecht leitende Schutzschicht aufweisenden Blechteil (42; 130), unter Anwendung eines hohlen Befestigungselementes (10; 120), das mittels eines Nietverfahrens oder Stanz-und Nietverfahrens an das Blechteil angebracht wird, wobei ein Kabelschuh (100) mittels einer Schraube (102) an das hohle Befestigungselement (10; 120) bzw. an das Blechteil angebracht wird, in dem die Schraube (102) durch den Kabelschuh (100) in das hohle Befestigungselement (10; 120) eingeschraubt wird und dabei das Blechteil durchdringt und im Blechteil ein Gewinde ausbildet oder nachformt.

2. Verfahren nach Anspruch 1, **dadurch gekennzeichnet, dass** das Blechteil (42) vorgelocht wird und das Vorlochen beispielsweise bei der Anbringung des Befestigungselementes (10) mittels eines vorlaufenden Lochstempels (49) oder in einer Station eines Folgeverbundwerkzeugs erfolgt, während dann die Anbringung des hohlen Befestigungselementes in Ausrichtung mit der Vorlochung in einer nachfolgenden Station des Folgeverbundwerkzeugs erfolgt.

3. Verfahren nach Anspruch 1, **dadurch gekennzeichnet, dass** das Blechteil (130) nachgelocht wird, wobei das Nachlochen beispielsweise bei der Anbringung des hohlen Befestigungselements (120) mittels eines nachlaufenden Lochstempels (139) oder in einer Station eines Folgeverbundwerkzeuges erfolgt, während dann das Nachlochen des Blechteils in Ausrichtung mit dem hohlen Befestigungselement in einer nachfolgenden Station des Folgeverbundwerkzeuges erfolgt.

4. Verfahren nach einem der vorhergehenden Ansprüche 1 bis 3, **dadurch gekennzeichnet, dass** der vor- oder nachlaufende Lochstempel (49; 139) im Blechteil (42; 130) ein kreisförmiges Loch bildet mit einem Durchmesser, der zumindest im wesentlichen dem Kerndurchmesser der Schraube (102) entspricht oder geringfügig kleiner als dieser ist.

5. Verfahren nach einem der vorhergehenden Ansprüche 1 bis 3, **dadurch gekennzeichnet, dass** der vor- oder nachlaufende Lochstempel einen polygonalen oder sternförmigen oder Zähne aufweisenden Querschnitt hat und ggf. in Zusammenarbeit mit einer ein Loch mit einem entsprechenden Querschnitt aufweisenden Matrize zusammenarbeitet, die das Blechteil abstützt.

6. Verfahren nach einem der vorhergehenden Ansprüche, **dadurch gekennzeichnet, dass** die Schraube (102) als gewindeschneidende oder -formende Schraube ausgebildet ist und das Gewinde in das Blechteil und ggf. auch in das hohle Befestigungselement (10; 120) schneidet bzw. formt.

7. Verfahren nach Anspruch 1, **dadurch gekennzeichnet, dass** eine das Blechteil vorbohrende und gewindeschneidende bzw. -formende Schraube verwendet wird, die ggf. vom hohlen Befestigungselement geführt wird.

8. Verfahren nach einem der vorhergehenden Ansprüche, **dadurch gekennzeichnet, dass** die Schraube (102) ein Kopfteil (108) aufweist und den Kabelschuh (100) entweder zwischen das Kopfteil (108) und dashohle Befestigungselement (10) oder zwischen das Kopfteil (108) und das Blechteil (130) klemmt.

9. Zusammenbauteil bestehend aus einem Blechteil (42; 130) mit einer nicht oder nur schlecht leitenden Schutzschicht, einem mit dem Blechteil vernieteten, hohlen Befestigungselement (10; 120), das zur Aufnahme einer einen Kabelschuh (100) befestigenden Schraube (102) ausgelegt ist, wobei das Blechteil ein Loch (75; 146) aufweist, das mit der die Schraube (102) aufnehmenden Passage (20; 148) des hohlen Befestigungselementes ausgerichtet ist, das Loch einen Durchmesser oder eine minimale Querabmessung aufweist, die zumindest im wesentlichen dem Kerndurchmessers des Gewindes der Schraube (102) entspricht oder geringfügig kleiner als dieser ist, und die Schraube (102) im hohlen Befestigungselement (10; 120) eingeschraubt ist und das Blechteil (42; 130) durchdringt und der Lochrand entsprechend dem Gewinde (112) der Schraube (102) ausgebildet ist, wobei die Schraube (102) sowohl im hohlen Befestigungselement (10; 120) wie auch im Blechteil (42; 130) eingeschraubt ist.

10. Zusammenbauteil nach Anspruch 10, **dadurch gekennzeichnet, dass** es sich bei dem hohlen Befestigungselement (10; 120) um ein vor der Anbringung mit einem Gewinde versehenes Mutterelement handelt.

11. Zusammenbauteil nach einem der Ansprüche 9 oder 10, **dadurch gekennzeichnet, dass** es sich bei der Schraube (102) um eine gewindeschneidende oder -formende Schraube handelt, die ggf. das Gewinde nicht nur in das Blechteil (42; 130), sondern auch in das hohle Befestigungselement (10; 120) schneidet bzw. formt.

12. Zusammenbauteil nach einem der Ansprüche 9 bis 11, **dadurch gekennzeichnet, dass** die Schraube (102) ein Kopfteil (108) aufweist und der Kabelschuh entweder zwischen das Kopfteil (108) und das hohle Befestigungselement (10; 120) oder zwischen das Kopfteil (108) und das Blechteil (42; 130) geklemmt ist bzw. wird.

13. Zusammenbauteil nach einem der Ansprüche 9 bis 12, **dadurch gekennzeichnet, dass** es sich bei dem hohlen Befestigungselement um ein Element mit einer dem Blechteil (42; 130) zugewandten Stirnfläche (12) mit einer ringförmigen Vertiefung (14) handelt, welche innerhalb einer erhabenen ringförmigen Anlagefläche (16) angeordnet ist, wobei die Bodenfläche der ringförmigen Vertiefung sich bis zu der Passage (20; 148) des Befestigungselements (10; 120) erstreckt, in der ringförmigen Anlagefläche keilförmige Vertiefungen (38) ausgebildet sind, die ihre größte Tiefe beim Übergang in die Seitenwand (15) der ringförmigen Vertiefung (14) aufweisen, denen Hinterschneidungen (41) bildende Vorsprünge (40) in der Seitenwand (15) der ringförmigen Vertiefung (14) zugeordnet sind.

14. Verwendung eines Zusammenbauteils nach einem der Ansprüche 9 bis 13, um eine elektrisch leitende Verbindung zwischen einem Kabelschuh und dem eine nicht oder nur schlecht leitende Schutzschicht aufweisenden Blechteil zu erzeugen, wobei unabhängig davon, ob der Kabelschuh (100) auf dem eine nicht oder nur schlecht leitende Schutzschicht aufweisenden Blechteil oder an der Stirnseite des Befestigungselements, das eine nicht oder nur schlecht leitende Verbindung zu dem eine nicht oder nur schlecht leitende Schutzschicht aufweisenden Blechteil hat, die Schraube (102) eine leitende Verbindung einerseits zum Kabelschuh (100) und andererseits zum Gewinde des Lochrandes des Blechteils und daher zum Blechteil aufweist.

## Claims

1. A method for the manufacturing of an electrical connection to a sheet metal part (42; 130) having a non-conductive or poorly conductive protective layer, using a hollow fastener element (10', 120) which is attached by means of a riveting process or a piercing and riveting process to the sheet metal part, wherein a terminal lug is attached by means of a screw (102) to the hollow fastener element (10; 120), i.e. to the sheet metal part, in which the screw (102) is screwed through the terminal lug (100) into the hollow fastener element and penetrates the sheet metal part and forms or reforms a thread in the sheet metal part.

2. A method in accordance with claim 1,
**characterised in that**
the sheet metal part is pre-holed and **in that** the pre-holing takes place by means of a preceding hole punch, e.g. during the attachment of the fastener element (10), or in one station of a progressive die tool set while the attachment of the hollow fastener element in alignment with the pre-formed hole takes place in a subsequent station of the progressive die tool set.

3. A method in accordance with claim 1,
**characterised in that**
the sheet metal part (130) is post-holed with the post-holing taking place, e.g. during the attachment of the hollow fastener element, by means of a follow-up hole punch (139) or in one station of a progressive die tool set, while the post-holing of the sheet metal part in alignment with the hollow fastener element then takes place in a following station of the progressive die tool set.

4. A method in accordance with any one of the preceding claims 1 to 3,
**characterised in that** the preceding hole punch or the follow-up hole punch (49; 139) forms a circular hole in the sheet metal part (42; 130) with a diameter which corresponds at least substantially to the core diameter of the screw (102) or is fractionally smaller than the latter.

5. A method in accordance with any one of the preceding claims 1 to 3,
**characterised in that** the preceding hole punch or follow-up hole punch has a polygonal cross-section or a star-like cross-section with teeth and optionally co-operates with a die button which supports the sheet metal part and has an aperture having a corresponding cross-section.

6. A method in accordance with any one of the preceding claims,
**characterised in that** the screw (102) is formed as a thread cutting or thread forming screw and cuts or forms the thread in the sheet metal part and optionally also in the hollow fastener element (10; 120).

7. A method in accordance with claim 1,
**characterised in that** a thread cutting or thread forming screw is used which predrills the sheet metal part and which is optionally guided by the hollow fastener element.

8. A method in accordance with any one of the preceding claims,
**characterised in that**
the screw (102) has a head part (108) and the terminal lug (100) is clamped between the head part (108) and the hollow fastener element (10) or between the head part (108) and the sheet metal part (130).

9. A component assembly comprising a sheet metal part (42; 130) having a non-conductive or poorly conductive protective layer, and a hollow fastener element (10; 120) riveted to the sheet metal part and designed to receive a screw (102) which secures a terminal lug (100), wherein the sheet metal part has a hole (75; 146) which is aligned with the passage (20; 148) of the hollow fastener element which receives the screw (102) and the hole has a diameter or a minimum transverse dimension which corresponds at least substantially to the core diameter of the thread or the screw or is fractionally smaller than the latter and wherein the screw (102) is screwed into the hollow fastener element (10; 120) and penetrates the sheet metal part (42; 130) and the periphery of the hole is formed in accordance with the thread (112) of the screw (102), with the screw (102) being screwed both into the hollow fastener element (10; 120) and also into the sheet metal part (42; 130).

10. A component assembly in accordance with claim 9,
**characterised in that**
the hollow fastener element (10; 120) is a nut element provided with a thread prior to the attachment.

11. A component assembly in accordance with one of the claims 9 or 10,
**characterised in that**
the screw (102) is a thread cutting or thread forming screw which optionally not only cuts or forms the thread in the sheet metal part (42; 130), but rather also in the hollow fastener element (10; 120).

12. A component assembly in accordance with any one of the claims 9 to 11,
**characterised in that** the screw (102) has a head part (108) and the terminal lug is clamped between the head part (108) and the hollow fastener element (10; 120) or between the head part (108) and the sheet metal part (42; 130).

13. A component assembly in accordance with any one of the claims 9 to 12,
**characterised in that** the hollow fastener element is an element having an end face (12) with a ring-like recess (14) confronting the sheet metal part (42; 130), with the ring-like recess (14) being disposed within the base surface of the ring-like recess extending up to the passage (20; 148) of the fastener element (10; 120) and with wedge-like recesses (38) being formed in the ring-like contact surface and having their greatest depth at the transition into the sidewall (15) of the ring-like recess (14), with projections (40) in the sidewall of the ring-like recess (14) which form undercuts (41) being associated with the wedge-like recesses (38).

14. Use of a component assembly in accordance with any one of the claims 9 to 13 in order to produce an electrically conductive connection between a terminal lug and the sheet metal part having a non-conducting or poorly conducting protective layer, wherein, irrespective of whether the terminal lug (100) sits on the sheet metal part having a non-conducting or poorly conducting protecting layer or at the end face of the fastener element which has a non-conducting or poorly conducting connection to the sheet metal part having a non-conducting or poorly conducting layer, the screw (102) has a conductive connection on the one hand to the terminal lug (100) and on the other hand to the thread of the periphery of the hole of the sheet metal part and thus to the sheet metal part.

## Revendications

1. Procédé de fabrication d'une connexion électrique avec une partie en tôle (42 ; 130) présentant une couche protectrice non conductrice ou uniquement faiblement conductrice, en employant un élément de fixation creux (10 ; 120), qui est appliqué sur la partie en tôle au moyen d'un procédé de rivetage ou d'un procédé de poinçonnage et de rivetage, une cosse de câble (100) étant appliquée sur l'élément de fixation creux (10 ; 120) ou sur la partie en tôle au moyen d'une vis (102), tandis que la vis (102) est vissée dans l'élément de fixation creux (10 ; 120) à travers la cosse de câble (100) et traverse ce faisant la partie en tôle, et un filetage étant réalisé ou postformé dans la partie en tôle.

2. Procédé selon la revendication 1, **caractérisé en ce que** la partie en tôle (42) est prépoinçonnée et **en ce que** le prépoinçonnage est par exemple effectué lors de l'application de l'élément de fixation (10) au moyen d'un poinçon antérieur (49) ou dans un poste d'un outil à suivre composé, tandis que l'application de l'élément de fixation creux est alors effectuée en alignement avec le prépoinçonnage dans un poste en aval de l'outil à suivre composé.

3. Procédé selon la revendication 1, **caractérisé en ce que** la partie en tôle (130) est poinçonnée ultérieurement, le poinçonnage ultérieur étant par exemple effectué lors de l'application de l'élément de fixation creux (120) au moyen d'un poinçon postérieur (139) ou dans un poste d'un outil à suivre composé, tandis que le poinçonnage ultérieur de la partie en tôle est alors effectué en alignement avec l'élément de fixation creux dans un poste en aval de l'outil à suivre composé.

4. Procédé selon l'une des revendications précédentes 1 à 3, **caractérisé en ce que** le poinçon antérieur ou postérieur (49 ; 139) forme un trou circulaire dans la partie en tôle (42 ; 130) présentant un diamètre qui correspond au moins pour l'essentiel au diamètre d'âme de la vis (102) ou qui est légèrement inférieur à celui-ci.

5. Procédé selon l'une des revendications précédentes 1 à 3, **caractérisé en ce que** le poinçon antérieur ou postérieur présente une section polygonale ou en forme d'étoile ou présentant des dents et opère, le cas échéant, en collaboration avec une matrice présentant un trou avec une section correspondante, ladite matrice soutenant la partie en tôle.

6. Procédé selon l'une des revendications précédentes, **caractérisé en ce que** la vis (102) est réalisée sous forme de vis taillant le filetage ou autotaraudeuse et coupe ou forme le filetage dans la partie en tôle et, le cas échéant, également dans l'élément de fixation creux (10 ; 120).

7. Procédé selon la revendication 1, **caractérisé en ce qu'**une vis taillant le filetage ou autotaraudeuse, qui perce de manière préliminaire la partie en tôle, est utilisée, ladite vis étant guidée, le cas échéant, par l'élément de fixation creux.

8. Procédé selon l'une des revendications précédentes, **caractérisé en ce que** la vis (102) présente une partie tête (108) et coince la cosse de câble (100) soit entre la partie tête (108) et l'élément de fixation creux (10), soit entre la partie tête (108) et la partie en tôle (130).

9. Ensemble de montage se composant d'une partie en tôle (42 ; 130) comportant une couche protectrice non conductrice ou uniquement faiblement conductrice, un élément de fixation creux (10 ; 120) riveté avec la partie en tôle, qui est conçu en vue du logement d'une vis (102) fixant une cosse de câble (100), la partie en tôle présentant un trou (75 ; 146), qui est aligné avec le passage (20 ; 148) de l'élément de fixation creux recevant la vis (102), le trou présentant un diamètre ou une dimension transversale minimale, qui correspond au moins pour l'essentiel au diamètre d'âme du filetage de la vis (102) ou qui est légèrement inférieur à celui-ci, et la vis (102) étant vissée dans l'élément de fixation creux (10 ; 120) et traversant la partie en tôle (42 ; 130), et le bord du trou étant réalisé en fonction du filetage (112) de la vis (102), où la vis (102) est vissée aussi bien dans l'élément de fixation creux (10 ; 120) que dans la partie en tôle (42 ; 130).

10. Ensemble de montage selon la revendication 9, **caractérisé en ce qu'**il s'agit dans le cas de l'élément de fixation creux (10 ; 120) d'un élément d'écrou muni d'un filetage avant l'application.

11. Ensemble de montage selon l'une des revendications 9 et 10, **caractérisé en ce qu'**il s'agit dans le cas de la vis (102) d'une vis taillant le filetage ou autotaraudeuse, qui coupe ou forme le filetage, le cas échéant, non seulement dans la partie en tôle (42 ; 130), mais également dans l'élément de fixation creux (10 ; 120).

12. Ensemble de montage selon l'une des revendications 9 à 11, **caractérisé en ce que** la vis (102) présente une partie tête (108) et la cosse de câble est coincée ou se coince soit entre la partie tête (108) et l'élément de fixation creux (10 ; 120), soit entre la partie tête (108) et la partie en tôle (42 ; 130).

13. Ensemble de montage selon l'une des revendications 9 à 12, **caractérisé en ce qu'**il s'agit, dans le cas de l'élément de fixation creux, d'un élément comportant une face terminale (12) tournée vers la partie en tôle (42 ; 130) avec un creux annulaire (14), lequel est agencé à l'intérieur d'une surface d'applique annulaire en relief (16), la surface du fond du creux annulaire s'étendant jusqu'au passage (20 ; 148) de l'élément de fixation creux (10 ; 120), des creux cunéiformes (38) étant réalisés dans la surface d'applique annulaire, qui présentent leur plus grande profondeur lors de la transition dans la paroi latérale (15) du creux annulaire (14), auxquels sont affectées des saillies (40) formant des contre-dépouilles (41) dans la paroi latérale (15) du creux annulaire (14).

14. Utilisation d'un ensemble de montage selon l'une des revendications 9 à 13 en vue de générer une connexion électroconductrice entre une cosse de câble et la partie en tôle présentant une couche protectrice non conductrice ou uniquement faiblement conductrice, où indépendamment du fait que la cosse de câble (100) est située sur la partie en tôle présentant une couche protectrice non conductrice ou uniquement faiblement conductrice ou sur le côté terminal de l'élément de fixation, qui présente une connexion non conductrice ou uniquement faiblement conductrice avec la partie en tôle présentant une couche protectrice non conductrice ou uniquement faiblement conductrice, la vis (102) présente une connexion conductrice, d'une part, avec la cosse de câble (100) et, d'autre part, avec le filetage du bord du trou de la partie en tôle et par conséquent avec la partie en tôle.
